# EUROPEAN PATENT APPLICATION

(11) **EP 2 882 147 A1**
(43) Date of publication of application: **10.06.2015**
(21) Application number: 13790740.8
(22) Date of filing: 28.06.2013
(51) Int. Cl.: H04L 12/70

(54) **COMMUNICATION METHOD AND SYSTEM BASED ON VOICE OVER INTERNET PROTOCOL**

(30) Priority: 13.09.2012 CN 201210338642
(71) Applicant: ZTE Corporation, Shenzhen, Guangdong 518057 (CN)
(72) Inventor: GAO, Yang, Shenzhen Guangdong 518057 (CN)
(74) Representative: Lambert, Ian Robert
(86) International application number: PCT/CN2013/078460
(87) International publication number: WO 2013/170810

(57) **Abstract**

A Voice over Internet Protocol (VoIP)-based communication method is provided, including: a VoIP terminal initiates a call service request to other terminals through an Internet Access Service Provider (ISP) and a VoIP service provider (VSP) with which the VoIP terminal is registered and receives call service requests initiated by the other terminals to the VoIP terminal so as to implement call services with the other terminals. A VoIP-based communication system is also provided. The disclosure supports a VoIP terminal to connect with a VoIP service provider through an Internet access service provider so that call services can be initiated and a calling VoIP terminal can accomplish call services through an Internet access service provider and a VoIP service provider with which the calling VoIP terminal is registered, thereby re-defining a relation between the Internet access service provider and the VoIP service provider, making clear a charging principle and accomplishing support for VoIP communications.

## Description

### TECHNICAL FIELD

The disclosure relates to Voice over Internet Protocol (VoIP) techniques, and in particular to a communication method and system based on Voice over Internet Protocol.

### BACKGROUD

Services based on Voice over Internet Protocol (VoIP) such as Skype, Google Voice bring great impingement to the traditional telecommunication industry because they are cost free and open.

Taking Skype as an example, such an Internet-based VoIP service has advantages below:

### 1) Skype uses an end-to-end encryption method so that information security can be ensured.

Skype encrypts information (voice, instant message, file) prior to transmission using a digital signature method, and decrypts encrypted information when receiving such information, thus even though the information needs to be forwarded by other nodes during data transmission, it is impossible for the information to be eavesdropped in midway, thereby preventing data from being tampered.

### 2) Skype can penetrate a firewall.

Most VoIP application programs cannot penetrate a firewall and a Network Address Translation (NAT). Skype is not a typical VoIP program, it uses Peer to Peer (P2P) techniques and can operate behind almost all firewalls or NATs.

### 3) Skype is convenient to use and has powerful functions.

Through a traditional telephone, only voices with frequencies between 300 Hz and 3000 Hz can be heard. Skype can support voices with all frequencies from the lowest voice to the highest-pitch voice; no other Internet technical systems have such a high call completion rate as Skype; it is so difficult to configure VoIP application programs at present that users who are not familiar with networks and computer techniques can hardly use them, while as to Skype, a user can then log in to Skype and start to make a voice call after registering an account without need of making any manual configuration both in aspects of hardware and software; besides voice calls, Skype also supports instant messages, searching and file transmission.

### 4) Skype can save resources as much as possible.

Skype can automatically select an optimal encoding mode based on connection conditions of both parties in a call. An average occupied bandwidth of a voice call is about 3 KB/S to 16 KB/S, and the practical occupied bandwidth varies depending on bandwidth conditions, network conditions and CPU performance of the other party. In an idle state, bandwidth of only 0k/s to 0.5 k/s is needed mainly for updating presence information of friends. Skype does not use resources of servers but is intermediated through equipments of other users in a network. In order not to occupy too many resources of users serving as intermediates, the upper rate is limited to 500K/S.

### 5) Skype can be used across platforms.

At present Skype has versions completely suitable for a Windows operation system, Pocket PC, Mac OS and Linux operation system, and its data transmission such as voice call and file exchange can be performed across platforms. Bottom layer techniques used by Skype ensure Skype to be readily transplanted to different terminal equipments, and this is more adaptive to development of terminal equipments and communication techniques.

### 6) Quality of voice communication is guaranteed.

Skype searches intelligently a best transmission path for each encrypted call and selects dynamically an optimal path in time so that the call completion rate, voice quality of a voice call through Skype may even exceed those of a traditional network to a great extent.

Taking Skype for example, such Internet-based VoIP services have following effects on telecommunication service providers:
According to a charge standard in most domestic cities, a local call costs 0.18 RMB for the first 3 minutes and 0.09 RMB for each minute thereafter; a domestic inter-city/province call costs 0.7 RMB per minute and costs 0.3 RMB per minute when an IP card is used; the cost of an international call varies depending on geographic distances, for example making a call to USA will cost 8 RMB per minute and cost more than 1 RMB even the call is made through an IP card. In contrast, making a call through Skypeout to a domestic fixed telephone costs 1.7 Eurocents per minute which is equal to 0.16 RMB per minute; an international call still costs 0.16 RMB per minute. Call charges for VoIP such as Skype is only 10% of those charged by traditional telecommunication service providers; and for international calls, the former only accounts for 1/40 to 1/30 of the latter. Huge difference in price makes VoIP services cause great impingement to fixed telephone service providers. If consumers have enough rights to choose, the result will be self-evident. That is why the Chinese version Skype only has a function of PC-to-PC communication but does not involve a function of PC-to-Phone communication.

At present, IPdrum, a provider of innovative solutions for software and hardware in the field of VoIP, launches formally in London a mobile communication product, i.e., IPdrumMobileSkypeCable. The solution of IPdrum enables users to make free calls using Skype through a mobile phone. It is reported that the technique can transfer an incoming call from Skype to a fixed telephone or a mobile phone. An oversea phone call can be made to a non-Skype user through SkypeOut without paying roaming fees. Skype approaches increasingly to technical modes of mobile voices and delivers gradually mobile communication experiences to its consumers. Therefore, the division of mobile telephone traffic by Skype can be expected soon.

Facing the development of Skype, service providers have only two ways: one is forcing it out using technical means which how can not be accomplished technically at present, and another is developing jointly with Skype to achieve a win-win future. In the United States, one cooperation way is that a traditional service provider provides VoIP with traditional access services to earn communication fees, another way is the traditional service provider provides initiatively such services. In China the way of providing access services may be different from that in US, since such communication tools occupy a large percent of service providers' network resources, it is not worthwhile for service providers and will greatly affect their incomes in fixed phone services; and there is another key factor i.e., market access. Therefore, traditional service providers are not likely to reach an agreement with Skype service providers regarding cooperation mode and profit sharing in a short term. As a result, the current situation is that two players choose separate paths, that is a key reason why a part of operating services have been shunted by Skype.

In consideration of above factors, with the increasing popularity of iPhone and mobile phones that operate in Android operation systems, great incomes are resulted from data traffic, but giant service providers in Europe still limit VoIP services so as to protect their own profits and fight against declines in sales volume of traditional voice calls and short message services.

One Britain telecommunication giant Vodafone limits Skype services, users can use Skype services only after paying extra 15 GBP (equal to about 23 USD) per month. A joint venture of France Telecom and Deutsche Telekom, located in Britain, forbids its networks to be connected to external services.

Facing the increasing development of VoIP, limitation on it or avoidance of it are not preferred solutions, but a win-win cooperation is a trend for future development.

### SUMMARY

In view of the above, the disclosure provides a VoIP-based communication method and device that can re-define a relation between an Internet access service provider and a VoIP service provider and can better support VoIP communications.

To this end, the technical solutions of the disclosure are implemented as follows.

A VoIP-based communication method, including that a Voice over Internet Protocol (VoIP) terminal initiates a call service request to other terminals through an Internet Access Service Provider (ISP) and a VoIP service provider (VSP) with which the VoIP terminal is registered and receives call service requests initiated by the other terminals to the VoIP terminal so as to implement call services with the other terminals.

In the above solution, the method may further include: the ISP and/or the VSP generate/generates charging information of the call services for the VoIP terminal.

In the above solution, the method may further include: when the other terminals are VoIP terminals, an ISP and/or a VSP with which the other terminals are registered generate/generates charging information of the call services for the other terminals.

In the above method, the method may include:
a calling VoIP terminal pays fee to a VSP with which the calling VoIP terminal is registered;
and/or a called VoIP terminal pays fee to a VSP with which the called VoIP terminal is registered;
and/or the calling VoIP terminal pays fee to an ISP with which the calling VoIP terminal is registered for call connection;
and/or the called VoIP terminal pays fee to an ISP with which the called VoIP terminal is registered for the call connection;
and/or the VSP with which the calling VoIP terminal is registered pays fee to the ISP with which the calling VoIP terminal is registered;
and/or the VSP with which the called VoIP terminal is registered pays fee to the ISP with which the called VoIP terminal is registered;
and/or the VSP with which the calling VoIP terminal is registered pays fee to the ISP with which the called VoIP terminal is registered;
and/or the VSP with which the called VoIP terminal is registered pays fee to the ISP with which the calling VoIP terminal is registered;
and/or the VSP with which the calling VoIP terminal is registered pays fee to the VSP with which the called VoIP terminal is registered;
and/or the VSP with which the called VoIP terminal is registered pays fee to the VSP with which the calling VoIP terminal is registered.

In the above solution, the implementing call services with the other terminals may include:
after receiving a call request message from the calling VoIP terminal, the ISP with which the calling VoIP terminal is registered forwards the call request message to the VSP with which the calling VoIP terminal is registered;
the VSP with which the calling VoIP terminal is registered forwards the call request message to the VSP with which the called VoIP terminal is registered, the VSP with which the called VoIP terminal is registered forwards the call request message to the ISP with which the called VoIP terminal is registered, and the ISP with which the called VoIP terminal is registered forwards the call request message to the called VoIP terminal; and
the called VoIP terminal transmits a call response message to the calling VoIP terminal through the ISP and VSP with which the called VoIP terminal is registered and the VSP and ISP with which the calling VoIP terminal is registered so as to accomplish call connection between the calling VoIP terminal and the called VoIP terminal.

In the above solution, the implementing call services with the other terminals may include:
after receiving a media modification request message transmitted by the calling VoIP terminal, the ISP with which the calling VoIP terminal is registered forwards the media modification request message to the VSP with which the calling VoIP terminal is registered;
the VSP with which the calling VoIP terminal is registered forwards the media modification request message to the VSP with which the called VoIP terminal is registered, the VSP with which the called VoIP terminal is registered forwards the media modification request message to the ISP with which the called VoIP terminal is registered, and the ISP with which the called VoIP terminal is registered forwards the media modification request message to the called VoIP terminal; and
the called VoIP terminal transmits a media modification response message to the calling VoIP terminal through the ISP and VSP with which the called VoIP terminal is registered and the VSP and ISP with which the calling VoIP terminal is registered so as to accomplish media modification.

In the above solution, the implementing call services with the other terminals may include:
after receiving a call release request message transmitted by the calling VoIP terminal, the ISP with which the calling VoIP terminal is registered forwards the call release request message to the VSP with which the calling VoIP terminal is registered;
the VSP with which the calling VoIP terminal is registered forwards the call release request message to the VSP with which the called VoIP terminal is registered, the VSP with which the called VoIP terminal is registered forwards the call release request message to the ISP with which the called VoIP terminal is registered, and the ISP with which the called VoIP terminal is registered forwards the call release request message to the called VoIP terminal; and
the called VoIP terminal transmits a call release response message to the calling VoIP terminal through the ISP and VSP with which the called VoIP terminal is registered and the VSP and ISP with which the calling VoIP terminal is registered so as to accomplish call release.

In the above solution, the method may further include: after receiving corresponding response message, the VSP and/or ISP with which the called VoIP terminal is registered generate/generates the charging information of the call services.

In the above solution, the ISP may include a fixed access service provider or a mobile access service provider;
the VSP may include a branch of the ISP or independent external entity;
the call services may include session-based applications such as audio, video, message, whiteboard application, desktop sharing, application sharing and file transmission.

A VoIP-based communication system, including a Voice over Internet Protocol (VoIP) terminal, an Internet Access Service Provider (ISP) and a VoIP service provider (VSP), wherein
the VoIP terminal is configured to initiate a call service request to other terminals through an ISP and a VSP with which the VoIP terminal is registered and receive call service requests initiated by the other terminals to the VoIP terminal so as to implement call services with the other terminals.

In the above solution, the ISP and/or the VSP may be configured to generate charging information of the call services for the VoIP terminal;
when the other terminals are VoIP terminals, generate charging information of the call services for the other terminals.
In the above solution, a calling VoIP terminal pays fee to a VSP with which the calling VoIP terminal is registered;
and/or a called VoIP terminal pays fee to a VSP with which the called VoIP terminal is registered;
and/or the calling VoIP terminal pays fee to an ISP with which the calling VoIP terminal is registered for call connection;
and/or the called VoIP terminal pays fee to an ISP with which the called VoIP terminal is registered for the call connection;
and/or the VSP with which the calling VoIP terminal is registered pays fee to the ISP with which the calling VoIP terminal is registered;
and/or the VSP with which the called VoIP terminal is registered pays fee to the ISP with which the called VoIP terminal is registered;
and/or the VSP with which the calling VoIP terminal is registered pays fee to the ISP with which the called VoIP terminal is registered;
and/or the VSP with which the called VoIP terminal is registered pays fee to the ISP with which the calling VoIP terminal is registered;
and/or the VSP with which the calling VoIP terminal is registered pays fee to the VSP with which the called VoIP terminal is registered;
and/or the VSP with which the called VoIP terminal is registered pays fee to the VSP with which the calling VoIP terminal is registered.

In the above solution, the ISP with which the calling VoIP terminal is registered may be configured to, after receiving a call request message transmitted by the calling VoIP terminal, forward the call request message to the VSP with which the calling VoIP terminal is registered;
the VSP with which the calling VoIP terminal is registered may be configured to forward the call request message to the VSP with which the called VoIP terminal is registered;
the VSP with which the called VoIP terminal is registered may be configured to forward the call request message to the ISP with which the called VoIP terminal is registered so that the ISP with which the called VoIP terminal is registered forwards the call request message to the called VoIP terminal; and
the called VoIP terminal may be further configured to transmit a call response message to the calling VoIP terminal through the ISP and VSP with which the called VoIP terminal is registered and the VSP and ISP with which the calling VoIP terminal is registered so as to accomplish call connection between the calling VoIP terminal and the called VoIP terminal.

In the above solution, the ISP with which the calling VoIP terminal is registered may be configured to, after receiving a media modification request message transmitted by the calling VoIP terminal, forward the media modification request message to the VSP with which the calling VoIP terminal is registered;
the VSP with which the calling VoIP terminal is registered may be configured to forward the media modification request message to the VSP with which the called VoIP terminal is registered;
the VSP with which the called VoIP terminal is registered may be configured to forward the media modification request message to the ISP with which the called VoIP terminal is registered so that the ISP with which the called VoIP terminal is registered forwards the media modification request message to the called VoIP terminal; and
the called VoIP terminal may be configured to transmit a media modification response message to the calling VoIP terminal through the ISP and VSP with which the called VoIP terminal is registered and the VSP and ISP with which the calling VoIP terminal is registered so as to accomplish media modification.

In the above solution, the ISP with which the calling VoIP terminal is registered may be configured to, after receiving a call release request message transmitted by the calling VoIP terminal, forward the call release request message to the VSP with which the calling VoIP terminal is registered;
the VSP with which the calling VoIP terminal is registered may be configured to forward the call release request message to the VSP with which the called VoIP terminal is registered;
the VSP with which the called VoIP terminal is registered may be configured to forward the call release request message to the ISP with which the called VoIP terminal is registered so that the ISP with which the called VoIP terminal is registered forwards the call release request message to the called VoIP terminal; and
the called VoIP terminal may be configured to transmit a call release response message to the calling VoIP terminal through the ISP and VSP with which the called VoIP terminal is registered and the VSP and ISP with which the calling VoIP terminal is registered so as to accomplish call release.

In the disclosure, a VoIP terminal initiates a call service request to other terminals through an Internet access service provider and a VoIP service provider with which the VoIP terminal is registered and receives call service requests initiated by the other terminals to the VoIP terminal so as to implement call services with the other terminals. The disclosure supports a VoIP terminal to connect with a VoIP service provider through an Internet access service provider so that call services can be initiated and a calling VoIP terminal can accomplish call services through an Internet access service provider and a VoIP service provider with which the calling VoIP terminal is registered, thereby re-defining a relation between the Internet access service provider and the VoIP service provider, making clear a charging principle and accomplishing support for VoIP communications.

### BRIEF DESCRIPTION OF THE DRAWINGS

Fig. 1 is a schematic structural diagram of a VoIP-based communication system according to a first embodiment of the disclosure;
Fig. 2 is a schematic structural diagram of a VoIP-based communication system according to a second embodiment of the disclosure;
Fig. 3 is a schematic structural diagram of a VoIP-based communication system according to a third embodiment of the disclosure;
Fig. 4 is a schematic structural diagram of a VoIP-based communication system according to a fourth embodiment of the disclosure;
Fig. 5 is a flow chart of a VoIP-based communication method according to a fifth embodiment of the disclosure;
Fig. 6 is a flow chart of a VoIP-based communication method according to a sixth embodiment of the disclosure;
Fig. 7 is a flow chart of a VoIP-based communication method according to a seventh embodiment of the disclosure; and
Fig. 8 is a schematic diagram showing a payment relation according to an embodiment of the disclosure.

### DETAILED DESCRIPTION

The basic idea of the disclosure is that a VoIP terminal initiates a call service request to other terminals through an Internet access service provider and a VoIP service provider with which the VoIP terminal is registered, and receives call service requests initiated by the other terminals to the VoIP terminal so as to accomplish call services with the other terminals.

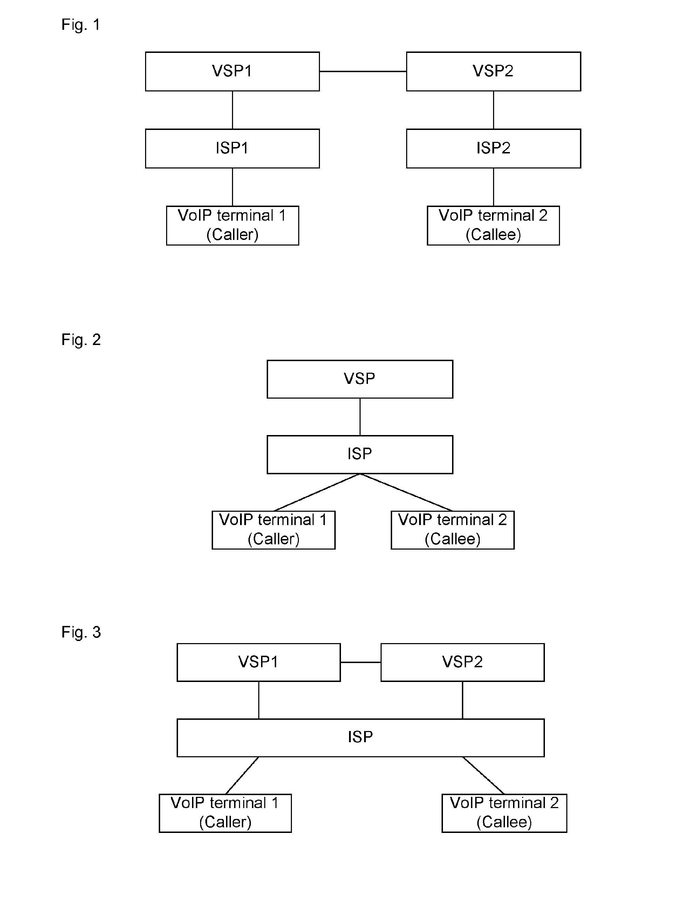

Fig. 1 is a schematic structural diagram of a VoIP-based communication system according to a first embodiment of the disclosure, as shown in Fig. 1, the VoIP-based communication system according to the first embodiment of the disclosure includes a VoIP terminal, an Internet Access Service Provider (ISP) and a VoIP Service Provider (VSP), wherein
a user pays fee to the VSP, and ways of paying may include time-based payment or monthly payment or other payment forms; wherein the time-based payment may be pre-payment or bill payment.

Except for fees paid for Internet access, a user does not need to pay the Internet access service provider for any VoIP-related fees.

The VSP pays fee to the ISP for usage of VoIP, and ways of paying may include time-based payment or monthly payment or other payment forms by a certain user, or payment not from a certain user (e.g., charging all users on a monthly basis).

For payments between a calling VSP and a called VSP, ways of paying may include time-based payment or monthly payment by a certain user, or payment not from a certain user (e.g., charging all users on a monthly basis).

In Fig. 1, both a VoIP terminal 1 and a VoIP terminal 2 are connected to an ISP and a VSP with which they are respectively registered so as to implement corresponding call services, for example, implementing a call service between the VoIP terminal 1 and the VoIP terminal 2.

In the technical solution according to the disclosure, a calling VoIP terminal and a called VoIP terminal (the VoIP terminal 1 is a calling party and the VoIP terminal 2 is a called party) implement a call service using an ISP and a VSP with which they are respectively registered.

The VoIP terminal is configured to initiate a call service request to other terminals through an ISP and a VSP with which the VoIP terminal is registered and to receive call service requests initiated by the other terminals to the VoIP terminal so as to accomplish call services with the other terminals.

In the example, the ISP and/or the VSP are/is configured to generate charging information of call services for the VoIP terminal;
when the other terminals are VoIP terminals, the ISP and/or the VSP with which the other terminals are registered generate/generates charging information of call connection for the other terminals.

In the example, a calling VoIP terminal pays fee to a VSP with which the calling VoIP terminal is registered;
and/or a called VoIP terminal pays fee to a VSP with which the called VoIP terminal is registered;
and/or the calling VoIP terminal pays fee to an ISP with which the calling VoIP terminal is registered for call connection;
and/or the called VoIP terminal pays fee to an ISP with which the called VoIP terminal is registered for the call connection;
and/or the VSP with which the calling VoIP terminal is registered pays fee to the ISP with which the calling VoIP terminal is registered;
and/or the VSP with which the called VoIP terminal is registered pays fee to the ISP with which the called VoIP terminal is registered;
and/or the VSP with which the calling VoIP terminal is registered pays fee to the ISP with which the called VoIP terminal is registered;
and/or the VSP with which the called VoIP terminal is registered pays fee to the ISP with which the calling VoIP terminal is registered;
and/or the VSP with which the calling VoIP terminal is registered pays fee to the VSP with which the called VoIP terminal is registered;
and/or the VSP with which the called VoIP terminal is registered pays fee to the VSP with which the calling VoIP terminal is registered.

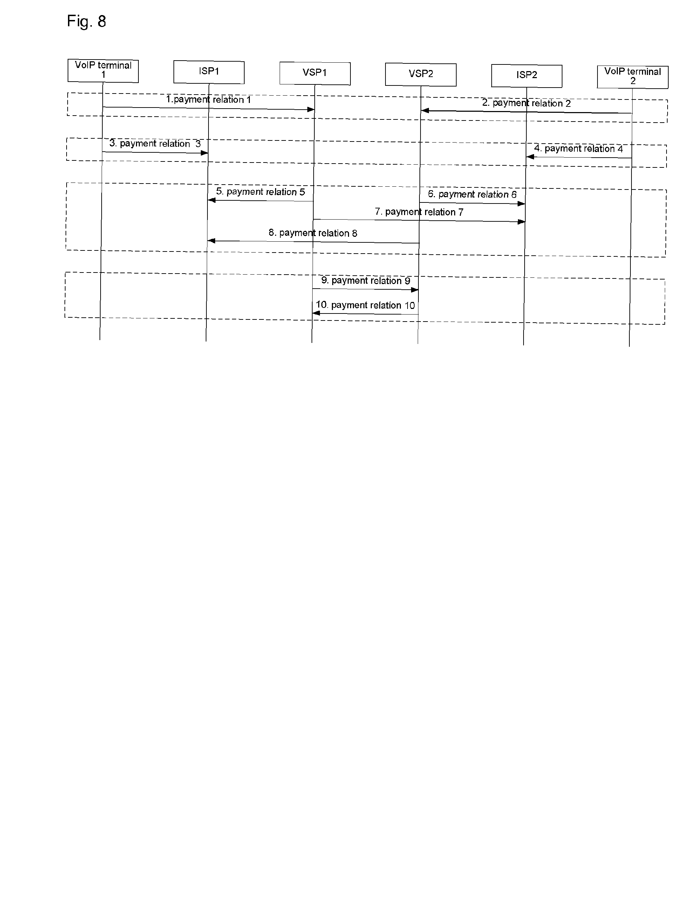

See Fig. 8 for implementation of corresponding charging by a charging network element.

In the example, the ISP with which the calling VoIP terminal is registered is configured to, after receiving a call request message transmitted by the calling VoIP terminal, forward the call request message to the VSP with which the calling VoIP terminal is registered;
the VSP with which the calling VoIP terminal is registered is configured to forward the call request message to the VSP with which the called VoIP terminal is registered;
the VSP with which the called VoIP terminal is registered is configured to forward the call request message to the ISP with which the called VoIP terminal is registered so that the ISP with which the called VoIP terminal is registered forwards the call request message to the called VoIP terminal;
the called VoIP terminal is further configured to transmit a call response message to the calling VoIP terminal through the ISP and VSP with which the called VoIP terminal is registered and the VSP and ISP with which the calling VoIP terminal is registered so as to accomplish call connection between the calling VoIP terminal and the called VoIP terminal.

In the example, the ISP with which the calling VoIP terminal is registered is configured to, after receiving a media modification request message from the calling VoIP terminal, forward the media modification request message to the VSP with which the calling VoIP terminal is registered;
the VSP with which the calling VoIP terminal is registered is configured to forward the media modification request message to the VSP with which the called VoIP terminal is registered;
the VSP with which the called VoIP terminal is registered is configured to forward the media modification request message to the ISP with which the called VoIP terminal is registered so that the ISP with which the called VoIP terminal is registered forwards the media modification request message to the called VoIP terminal;
the called VoIP terminal is configured to transmit a media modification response message to the calling VoIP terminal through the ISP and VSP with which the called VoIP terminal is registered and the VSP and ISP with which the calling VoIP terminal is registered so as to accomplish media modification.

In the example, the ISP with which the calling VoIP terminal is registered is configured to, after receiving a call release request message from the calling VoIP terminal, forward the call release request message to the VSP with which the calling VoIP terminal is registered;
the VSP with which the calling VoIP terminal is registered is configured to forward the call release request message to the VSP with which the called VoIP terminal is registered;
the VSP with which the called VoIP terminal is registered is configured to forward the call release request message to the ISP with which the called VoIP terminal is registered so that the ISP with which the called VoIP terminal is registered forwards the call release request message to the called VoIP terminal;
the called VoIP terminal is configured to transmit a call release response message to the calling VoIP terminal through the ISP and VSP with which the called VoIP terminal is registered and the VSP and ISP with which the calling VoIP terminal is registered so as to accomplish call release.

In the example, using Deep Packet Inspection (DPI) techniques, the ISP may detect VoIPs and collect charging information, such as session start time, session end time, media components (types, e.g., Audio, Video) used in a session.

The ISP may charge based on different media components and attributes and based on different VSPs.

In the example, the ISP may be a fixed access service provider or a mobile access service provider such as access service providers of GPRS, 3G and LTE.

The VSP may be a branch of the ISP or may be an independent external entity.

The call services include audio, video, message, whiteboard application, desktop sharing, application sharing, file transmission and other session-based applications.

Fig. 2 is a schematic structural diagram of a VoIP-based communication system according to a second embodiment of the disclosure, as shown in Fig. 2, in the VoIP-based communication system according to the second embodiment of the disclosure, a calling VoIP terminal and a called VoIP terminal (VoIP 1 is a calling party and VoIP 2 is a called party) use a same VSP and a same ISP to implement a call service, and the implementation way is substantially the same as that described in Fig. 1.

Fig. 3 is a schematic structural diagram of a VoIP-based communication system according to a third embodiment of the disclosure, as shown in Fig. 3, in the VoIP-based communication system according to the third embodiment of the disclosure, a calling VoIP terminal and a called VoIP terminal (VoIP 1 is a calling party and VoIP 2 is a called party) use a same ISP and respective VSPs with which they are registered to implement a call service, and the implementation way is substantially the same as that described in Fig. 1.

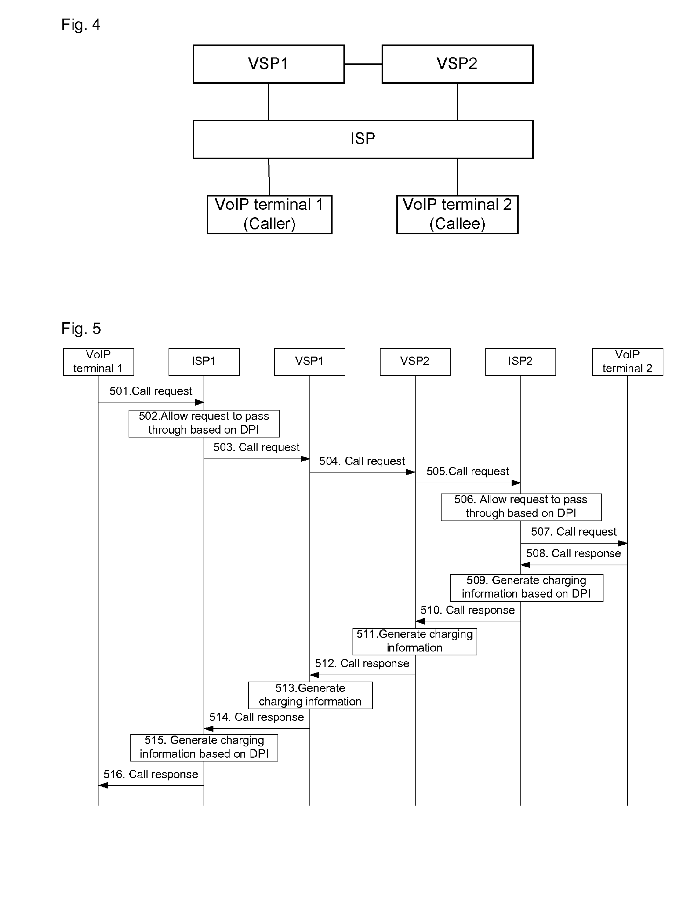

Fig. 4 is a schematic structural diagram of a VoIP-based communication system according to a fourth embodiment of the disclosure, as shown in Fig. 4, in the VoIP-based communication system according to the fourth embodiment of the disclosure, a calling VoIP terminal and a called VoIP terminal (VoIP 1 is a calling party and VoIP 2 is a called party) use a same VSP and respective ISPs with which they are registered to implement a call service, and the implementation way is substantially the same as that described in Fig. 1.

Each network element and corresponding functions in the VoIP-based communication system according to the disclosure will be elaborated below with reference to specific examples. Each application example below is described based on the VoIP-based communication system as shown in Fig. 1. VoIP-based communication systems as shown respectively in Figs. 2-4 have substantially same application ways as the system shown in Fig. 1, thus detailed description thereof will not be repeated.

Fig. 5 is a flow chart of a VoIP-based communication method according to a fifth embodiment of the disclosure, as shown in Fig. 5, at a call establishment stage, the VoIP-based communication method includes the following steps:
step 501 is that VoIP terminal 1 transmits a call request message to ISP 1;
step 502 is that ISP 1 allows the request message to pass through based on DPI;
step 503 is that ISP 1 forwards the call request message to VSP 1;
step 504 is that VSP 1 forwards the call request message to VSP 2;
step 505 is that VSP 2 forwards the call request message to ISP 2;
step 506 is that ISP 2 allows the request message to pass through based on DPI;
step 507 is that ISP 2 forwards the call request message to VoIP terminal 2;
step 508 is that VoIP terminal 2 transmits a call response;
step 509 is that based on DPI, ISP 2 generates charging information such as media component 1 in use (e.g., audio), time t 1;
step 510 is that ISP 2 forwards the call response to VSP 2;
step 511 is that VSP 2 generates charging information such as media component 1 in use (e.g., audio), time t 1;
step 512 is that VSP 2 forwards the call response to VSP 1;
step 513 is that VSP 1 generates charging information such as media component 1 in use (e.g., audio), time t 1;
step 514 is that VSP 1 forwards the call response to ISP 1;
step 515 is that based on DPI, ISP 1 generates charging information such as media component 1 in use (e.g., audio), time t 1; and
step 516 is that ISP 1 forwards the call response to VoIP terminal 1;

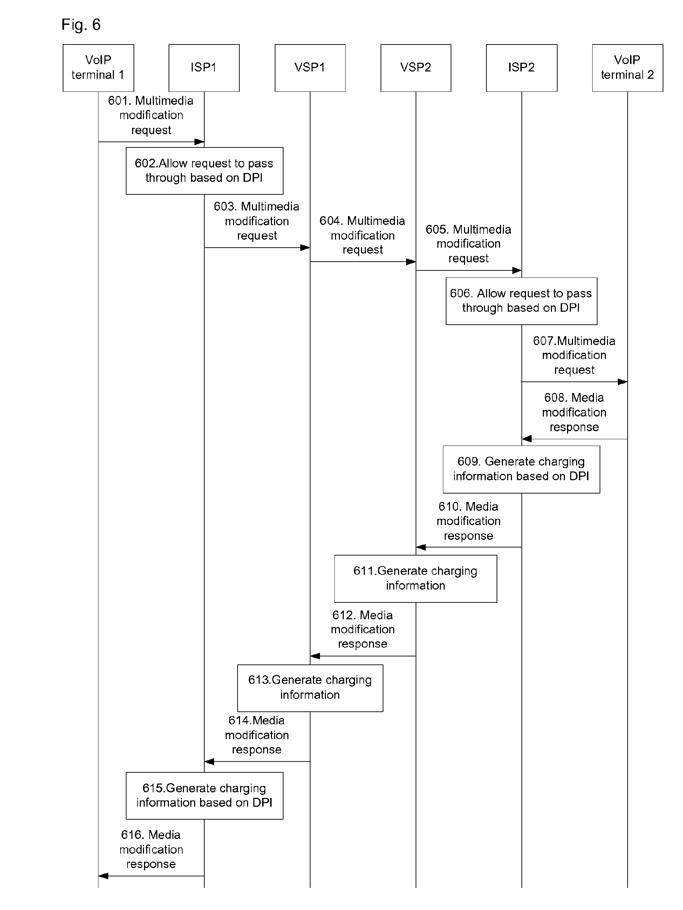

Fig. 6 is a flow chart of a VoIP-based communication method according to a sixth embodiment of the disclosure, as shown in Fig. 6, at a media modification stage, the VoIP-based communication method includes the following steps:
step 601 is that VoIP terminal 1 transmits a media modification request message to ISP 1;
step 602 is that ISP 1 allows the request message to pass through based on DPI;
step 603 is that ISP 1 forwards the media modification request message to VSP 1;
step 604 is that VSP 1 forwards the media modification request message to VSP 2;
step 605 is that VSP 2 forwards the media modification request message to ISP 2;
step 606 is that ISP 2 allows the request message to pass through based on DPI;
step 607 is that ISP 2 forwards the media modification request message to VoIP terminal 2;
step 608 is that VoIP terminal 2 transmits a media modification response;
step 609 is that based on DPI, ISP 2 generates charging information such as newly-added media component 2 (e.g., video), time t 2;
step 610 is that ISP 2 forwards the media modification response to VSP 2;
step 611 is that VSP 2 generates charging information such as newly-added media component 2 (e.g., video), time t 2;
step 612 is that VSP 2 forwards the media modification response to VSP 1;
step 613 is that VSP 1 generates charging information such as newly-added media component 2 (e.g., video), time t 2;
step 614 is that VSP 1 forwards the media modification response to ISP 1;
step 615 is that based on DPI, ISP 1 generates charging information such as newly-added media component 2 (e.g., video), time t 2; and
step 616 is that ISP 1 forwards the media modification response to VoIP terminal 1;

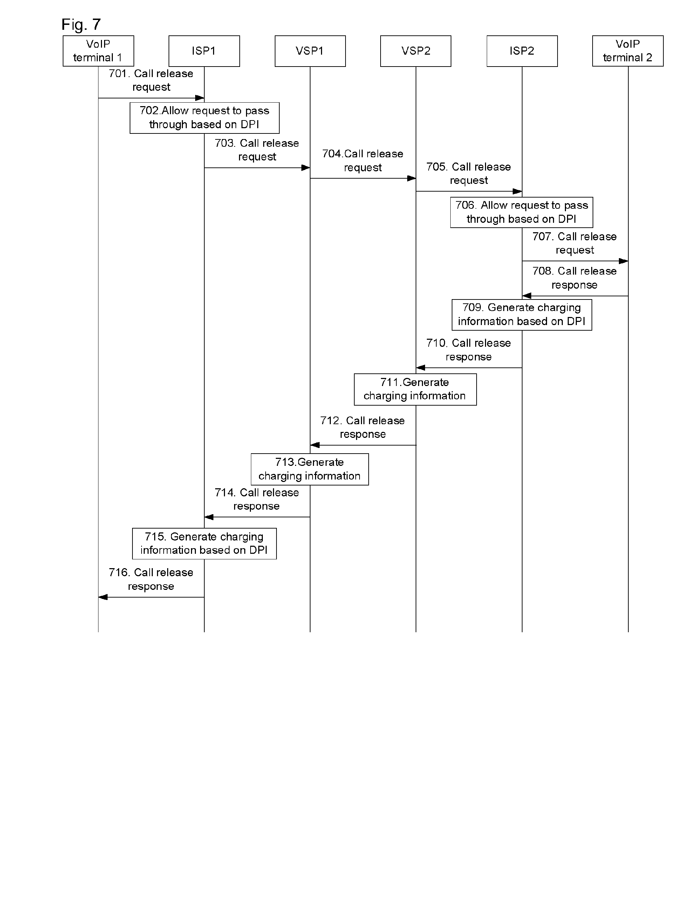

Fig. 7 is a flow chart of a VoIP-based communication method according to a seventh embodiment of the disclosure, as shown in Fig. 7, at a call release stage, the VoIP-based communication method according to the example includes the following steps:
step 701 is that VoIP terminal 1 transmits a call release request message to ISP 1; ,
step 702 is that ISP 1 allows the request message to pass through based on DPI;
step 703 is that ISP 1 forwards the call release request message to VSP 1;
step 704 is that VSP 1 forwards the call release request message to VSP 2;
step 705 is that VSP 2 forwards the call release request message to ISP 2;
step 706 is that ISP 2 allows the request message to pass through based on DPI;
step 707 is that ISP 2 forwards the call release request message to VoIP terminal 2;
step 708 is that VoIP terminal 2 transmits a call release response;
step 709 is that based on DPI, ISP 2 generates charging information such as time t 3;
step 710 is that ISP 2 forwards the call release response to VSP 2;
step 711 is that VSP 2 generates charging information such as time t 3;
step 712 is that VSP 2 forwards the call release response to VSP 1;
step 713 is that VSP 1 generates charging information such as time t 3;
step 714 is that VSP 1 forwards the call release response to ISP 1;
step 715 is that based on DPI, ISP 1 generates charging information such as time t 3;
step 716 is that ISP 1 forwards the call release response to VoIP terminal 1;

Fig. 8 is a schematic diagram showing a payment relation according to an embodiment of the disclosure; as shown in Fig. 8, a service time of a media component 1 is t3-t1, and a service time of a media component 2 is t2-t1. Specifically, payment relation 1 represents that a calling user pays fee to a calling VSP 1; payment relation 2 represents that a called user pays fee to a called VSP 2; payment relation 3 represents that the calling user pays fee to a calling ISP 1 (payment for VoIP besides Internet access fee); payment relation 4 represents that the called user pays fee to a called ISP 2 (payment for VoIP besides Internet access fee); payment relation 5 represents VSP 1 pays ISP 1; since VSP 1 of the calling user uses a payment for access through ISP 1, the payment in relation 5 is generally lower than that in payment relation 1; payment relation 6 represents VSP 2 pays ISP 2; since VSP 2 of the called user uses a payment for access by ISP 2, the payment in relation 6 is generally lower than that in payment relation 2; payment relation 7 represents VSP 1 pays ISP 2, ISP 2 may use its own ascendancy (if has) to charge VSP 1 for a VoIP access of non-VSP 1 users; payment relation 8 represents VSP 2 pays ISP 1, ISP 1 may use its own ascendancy (if has) to charge VSP 2 for a VOIP access of non-VSP 2 users; payment relation 9 represents VSP 1 of the calling user pays fee to the called VSP 2; and payment relation 10 represents VSP 2 of the called user pays fee to the calling VSP 1.

What described are merely preferable embodiments of the disclosure, and are not intended to limit the disclosure.

### INDUSTRIAL APPLICABILITY

The disclosure supports a VoIP terminal to connect with a VoIP service provider through an Internet access service provider so that call services can be initiated and a calling VoIP terminal can accomplish call services through an Internet access service provider and a VoIP service provider with which the calling VoIP terminal is registered, thereby re-defining a relation between the Internet access service provider and the VoIP service provider, making clear a charging rule and accomplishing support for VoIP communications.

## Claims

1. A communication method based on Voice over Internet Protocol (VoIP), comprising:
initiating, by a VoIP terminal, a call service request to other terminals through an Internet Access Service Provider (ISP) and a VoIP service provider (VSP) with which the VoIP terminal is registered, and receiving, by the VoIP terminal, call service requests initiated by the other terminals to the VoIP terminal so as to implement call services with the other terminals.

2. The method according to claim 1, further comprising:
generating, by the ISP and/or the VSP, charging information of the call services for the VoIP terminal.

3. The method according to claims 1 or 2, further comprising:
when the other terminals are VoIP terminals, generating, by an ISP and/or a VSP with which the other terminals are registered, charging information of the call services for the other terminals.

4. The method according to claim 3, further comprising:
paying fee, by a calling VoIP terminal, to a VSP with which the calling VoIP terminal is registered;
and/or paying fee, by a called VoIP terminal, to a VSP with which the called VoIP terminal is registered;
and/or paying fee, by the calling VoIP terminal, to an ISP with which the calling VoIP terminal is registered for call connection;
and/or paying fee, by the called VoIP terminal, to an ISP with which the called VoIP terminal is registered for the call connection;
and/or paying fee, by the VSP with which the calling VoIP terminal is registered, to the ISP with which the calling VoIP terminal is registered;
and/or paying fee, by the VSP with which the called VoIP terminal is registered, to the ISP with which the called VoIP terminal is registered;
and/or paying fee, by the VSP with which the calling VoIP terminal is registered, to the ISP with which the called VoIP terminal is registered;
and/or paying fee, by the VSP with which the called VoIP terminal is registered, to the ISP with which the calling VoIP terminal is registered;
and/or paying fee, by the VSP with which the calling VoIP terminal is registered, to the VSP with which the called VoIP terminal is registered;
and/or paying fee, by the VSP with which the called VoIP terminal is registered, to the VSP with which the calling VoIP terminal is registered.

5. The method according to claim 3, wherein the implementing call services with the other terminals comprises:
after an ISP with which a calling VoIP terminal is registered receives a call request message from the calling VoIP terminal, forwarding the call request message by the ISP with which the calling VoIP terminal is registered to a VSP with which the calling VoIP terminal is registered;
forwarding, by the VSP with which the calling VoIP terminal is registered, the call request message to a VSP with which a called VoIP terminal is registered, forwarding, by the VSP with which the called VoIP terminal is registered, the call request message to an ISP with which the called VoIP terminal is registered, and forwarding, by the ISP with which the called VoIP terminal is registered, the call request message to the called VoIP terminal; and
transmitting, by the called VoIP terminal, a call response message to the calling VoIP terminal through the ISP and VSP with which the called VoIP terminal is registered and the VSP and ISP with which the calling VoIP terminal is registered so as to accomplish call connection between the calling VoIP terminal and the called VoIP terminal.

6. The method according to claim 3, wherein the implementing call services with the other terminals comprises:
after an ISP with which a calling VoIP terminal is registered receives a media modification request message from the calling VoIP terminal, forwarding the media modification request message by the ISP with which the calling VoIP terminal is registered to a VSP with which the calling VoIP terminal is registered;
forwarding, by the VSP with which the calling VoIP terminal is registered, the media modification request message to a VSP with which a called VoIP terminal is registered, forwarding, by the VSP with which the called VoIP terminal is registered, the media modification request message to an ISP with which the called VoIP terminal is registered, and forwarding, by the ISP with which the called VoIP terminal is registered, the media modification request message to the called VoIP terminal; and
transmitting, by the called VoIP terminal, a media modification response message to the calling VoIP terminal through the ISP and VSP with which the called VoIP terminal is registered and the VSP and ISP with which the calling VoIP terminal is registered so as to accomplish media modification.

7. The method according to claim 3, wherein the implementing call services with the other terminals comprises:
after an ISP with which a calling VoIP terminal is registered receives a call release request message from the calling VoIP terminal, forwarding the call release request message to a VSP with which the calling VoIP terminal is registered;
forwarding, by the VSP with which the calling VoIP terminal is registered, the call release request message to a VSP with which a called VoIP terminal is registered, forwarding, by the VSP with which the called VoIP terminal is registered, the call release request message to an ISP with which the called VoIP terminal is registered, and forwarding, by the ISP with which the called VoIP terminal is registered, the call release request message to the called VoIP terminal; and
transmitting, by the called VoIP terminal, a call release response message to the calling VoIP terminal through the ISP and VSP with which the called VoIP terminal is registered and the VSP and ISP with which the calling VoIP terminal is registered so as to accomplish call release.

8. The method according to any one of claims 5 to 7, further comprising:
after the VSP and/or ISP with which the called VoIP terminal is registered receive/receives corresponding response message, generating the charging information of the call services.

9. The method according to claim 8, wherein the ISP comprises a fixed access service provider or a mobile access service provider;
the VSP comprises a branch of the ISP or independent external entity;
the call services comprise session-based applications including audio, video, message, whiteboard application, desktop sharing, application sharing and file transmission.

10. A communication system based on Voice over Internet Protocol (VoIP), comprising a VoIP terminal, an Internet Access Service Provider (ISP) and a VoIP service provider (VSP), wherein
the VoIP terminal is configured to initiate a call service request to other terminals through an ISP and a VSP with which the VoIP terminal is registered and receive call service requests initiated by the other terminals to the VoIP terminal so as to implement call services with the other terminals.

11. The system according to claim 10, wherein the ISP and/or the VSP are/is configured to generate charging information of the call services for the VoIP terminal;
when the other terminals are VoIP terminals, an ISP and/or a VSP with which the other terminals are registered generate/generates charging information of the call services for the other terminals.

12. The system according to claim 11, wherein
a calling VoIP terminal pays fee to a VSP with which the calling VoIP terminal is registered;
and/or a called VoIP terminal pays fee to a VSP with which the called VoIP terminal is registered;
and/or the calling VoIP terminal pays fee to an ISP with which the calling VoIP terminal is registered for call connection;
and/or the called VoIP terminal pays fee to an ISP with which the called VoIP terminal is registered for the call connection;
and/or the VSP with which the calling VoIP terminal is registered pays fee to the ISP with which the calling VoIP terminal is registered;
and/or the VSP with which the called VoIP terminal is registered pays fee to the ISP with which the called VoIP terminal is registered;
and/or the VSP with which the calling VoIP terminal is registered pays fee to the ISP with which the called VoIP terminal is registered;
and/or the VSP with which the called VoIP terminal is registered pays fee to the ISP with which the calling VoIP terminal is registered;
and/or the VSP with which the calling VoIP terminal is registered pays fee to the VSP with which the called VoIP terminal is registered;
and/or the VSP with which the called VoIP terminal is registered pays fee to the VSP with which the calling VoIP terminal is registered.

13. The system according to claim 11, wherein
an ISP with which a calling VoIP terminal is registered is configured to, after receiving a call request message from the calling VoIP terminal, forward the call request message to a VSP with which the calling VoIP terminal is registered;
the VSP with which the calling VoIP terminal is registered is configured to forward the call request message to a VSP with which a called VoIP terminal is registered;
the VSP with which the called VoIP terminal is registered is configured to forward the call request message to an ISP with which the called VoIP terminal is registered so that the ISP with which the called VoIP terminal is registered forwards the call request message to the called VoIP terminal; and
the called VoIP terminal is further configured to transmit a call response message to the calling VoIP terminal through the ISP and VSP with which the called VoIP terminal is registered and the VSP and ISP with which the calling VoIP terminal is registered so as to accomplish call connection between the calling VoIP terminal and the called VoIP terminal.

14. The system according to claim 11, wherein
an ISP with which a calling VoIP terminal is registered is configured to, after receiving a media modification request message from the calling VoIP terminal, forward the media modification request message to a VSP with which the calling VoIP terminal is registered;
the VSP with which the calling VoIP terminal is registered is configured to forward the media modification request message to a VSP with which a called VoIP terminal is registered;
the VSP with which the called VoIP terminal is registered is configured to forward the media modification request message to an ISP with which the called VoIP terminal is registered so that the ISP with which the called VoIP terminal is registered forwards the media modification request message to the called VoIP terminal; and
the called VoIP terminal is configured to transmit a media modification response message to the calling VoIP terminal through the ISP and VSP with which the called VoIP terminal is registered and the VSP and ISP with which the calling VoIP terminal is registered so as to accomplish media modification.

15. The system according to claim 11, wherein
an ISP with which a calling VoIP terminal is registered is configured to, after receiving a call release request message from the calling VoIP terminal, forward the call release request message to a VSP with which the calling VoIP terminal is registered;
the VSP with which the calling VoIP terminal is registered is configured to forward the call release request message to a VSP with which a called VoIP terminal is registered;
the VSP with which the called VoIP terminal is registered is configured to forward the call release request message to an ISP with which the called VoIP terminal is registered so that the ISP with which the called VoIP terminal is registered forwards the call release request message to the called VoIP terminal; and
the called VoIP terminal is configured to transmit a call release response message to the calling VoIP terminal through the ISP and VSP with which the called VoIP terminal is registered and the VSP and ISP with which the calling VoIP terminal is registered so as to accomplish call release.
